# DEMANDE DE BREVET EUROPEEN

(11) **EP 3 805 414 A1**
(43) Date de publication de la demande: **14.04.2021**
(21) Numéro de dépôt: 20201051.8
(22) Date de dépôt: 09.10.2020
(51) Int. Cl.: C22B 47/00

(54) **PROCEDE DE SEPARATION SELECTIVE DU MANGANESE**

(30) Priorité: 10.10.2019 FR 1911250
(71) Demandeur: Commissariat à l'énergie atomique et aux énergies alternatives, 75015 Paris (FR)
(72) Inventeur: BILLY, Emmanuel, 38054 GRENOBLE CEDEX 09 (FR)
(74) Mandataire: Brevalex

(57) **Abrégé**

Procédé de séparation sélective de manganèse à partir d'une solution comprenant plusieurs éléments métalliques, le procédé comprenant une étape au cours de laquelle on ajoute un sel de peroxomonosulfate à une solution à traiter contenant des ions manganèse et des ions additionnels, de préférence des ions cobalt, la solution à traiter ayant un pH allant de 0,1 à 2,5 moyennant quoi on fait précipiter sélectivement les ions manganèse sous forme d'oxyhydroxyde de manganèse.

## Description

### DOMAINE TECHNIQUE

La présente invention se rapporte au domaine général de la séparation sélective du manganèse à partir d'une solution à traiter contenant un ou plusieurs autres éléments métalliques en vue de la démanganiser.

L'invention trouve des applications dans de nombreux domaines industriels, et notamment pour la valorisation et/ou le recyclage des aciers ou des électrodes de batteries Li-Ion, pour la démanganisation des bains d'électrolyse ou des effluents des usines de traitement de certains minerais.

L'invention est particulièrement intéressante puisqu'elle permet d'extraire sélectivement, et avec une très forte efficacité, le manganèse d'une solution contenant plusieurs éléments métalliques à valoriser.

### ÉTAT DE LA TECHNIQUE ANTÉRIEURE

Actuellement, le manganèse est utilisé dans de nombreux domaines, par exemple, pour former de nombreux alliages, notamment des alliages en acier puisque le manganèse améliore les propriétés des aciers (roulement, forgeage, résistance, ténacité, rigidité, résistance à l'usure, dureté et/ou trempabilité). On le retrouve également sous la forme de sulfate dans les engrais, dans des nodules sous-marins polymétalliques (avec Ni et Co notamment) ou encore dans les batteries Li-ion comme matériaux de cathode souvent en mélange avec du nickel et du cobalt.

Cependant, la séparation sélective du manganèse d'une solution contenant plusieurs espèces métalliques est complexe, en particulier lorsque la solution contient également du nickel et/ou du cobalt dont la chimie est très proche de celle du manganèse.

Parmi les méthodes de séparation les plus répandues, on peut citer :
- les procédés sous pression qui consistent à réaliser, d'une part, une étape d'oxydation avec de l'oxygène sous pression et, d'autre part, une étape de réduction par de l'hydrogène, ce qui nécessite l'emploi de pressions élevées et rend les installations coûteuses,
- les méthodes utilisant des résines échangeuses d'ions; ces méthodes sont difficilement industrialisable d'un point de vue économique à cause des coûts des résines et des réactifs nécessaire à l'élution et/ou à la régénération des résines. De plus, la capacité des résines est limitée, ce qui limite son intérêt pour des concentrations faibles (quelques mg/L en cobalt),
- les méthodes d'extraction par solvant (ou extraction liquide/liquide) qui nécessitent des molécules complexes et des solvants organiques, ce qui représente un frein économique et/ou environnemental.

Afin de remédier à ces inconvénients, récemment des procédés mettant en œuvre une précipitation oxydante se sont développés. La précipitation oxydante consiste à oxyder les ions dissous, avec un oxydant, et à former un solide de cobalt. Les oxydants conventionnels sont : le dioxyde de soufre avec l'oxygène (SO₂/O₂), le permanganate de potassium (KMnO₄), l'hypochlorite de sodium (NaClO), le chlore (Cl₂ gazeux), l'ozone ou un mélange d'acide sulfurique et de peroxyde d'hydrogène (H₂SO₄/H₂O₂).

Par exemple, dans le document US 4,198,377 A1, le procédé concerne la récupération du manganèse à partir d'une solution acide issue de minerais ou de déchets pouvant contenir d'autres éléments tels que Ni, Fe, Co. Le procédé comprend l'introduction d'acide peroxymonosulfurique (PMS) en plusieurs fois (de 2 à 6) pour oxyder le manganèse en Mn(IV). Quand la solution comprend du cobalt et du nickel, le pH est inférieur à 3. L'acide peroxymonosulfurique peut être obtenu en mélangeant de l'oléum (acide sulfurique et trioxyde de soufre) et du peroxyde d'hydrogène. Les températures du procédé sont supérieures à 60°C et dans la pratique entre 70 °C et 90 °C. Un agent neutralisant, tel que NH₄OH, est introduit lors d'une étape ultérieure pour neutraliser l'acidité. La quantité stœchiométrique de PMS va 110% à 160%. Aucune donnée n'est fournie par rapport à la sélectivité ou par rapport à la pureté des produits récupérés.

Cependant, un tel procédé nécessite :
- des températures élevées (supérieures à 60°C), ce qui représente des risques pour les opérateurs et les installations,
- des concentrations en acides élevées : à de telles concentrations, ils peuvent se décomposer dans le temps et donc ceci impose des conditions de stockage coûteuses,
- l'introduction des réactifs sous forme de liquide, ce qui génère des effluents.

Le procédé décrit dans le document US 2005/0120828 A1 est un procédé d'élimination du manganèse d'une solution contenant également du cobalt. Le pH de la solution est ajusté dans la plage entre 2,5 et 6. De l'hypochlorite de sodium (NaOCl) est ajouté en tant qu'agent oxydant pour atteindre un potentiel d'oxydoréduction permettant la précipitation de Co²⁺ en Co(OH)₃.

Cependant, l'utilisation d'une solution de NaOCl génèrera des effluents. La présence des chlorures est également un frein à l'industrialisation vis-à-vis des risques et des coûts pour les installations.

### EXPOSÉ DE L'INVENTION

Un but de la présente invention est de proposer un procédé d'extraction du manganèse, remédiant aux inconvénients de l'art antérieur, et en particulier un procédé d'extraction, propre, permettant de récupérer, rapidement et efficacement, le manganèse à partir d'une solution multi-métallique pouvant contenir, par exemple, du nickel et/ou du cobalt.

Pour cela, la présente invention propose un procédé de séparation sélective de manganèse comprenant une étape au cours de laquelle on ajoute un sel de peroxomonosulfate à une solution à traiter contenant des ions manganèse et des ions additionnels choisis parmi des ions métalliques, des ions de métaux alcalins et/ou des ions de terres rares, la solution à traiter ayant un pH allant de 0,1 à 2,5 moyennant quoi on fait précipiter sélectivement les ions manganèse sous forme d'oxyhydroxyde de manganèse.

L'invention se distingue fondamentalement de l'art antérieur par la mise en œuvre d'une étape de précipitation oxydante au cours de laquelle on utilise un sel de peroxomonosulfate afin de séparer sélectivement le manganèse d'une solution contenant d'autres ions. Le manganèse est extrait sous la forme d'un précipité d'oxohydroxyde de manganèse (MnOOH), avec Mn(III) et Mn(IV) pouvant être facilement transformé en oxyde de manganèse. Ce procédé permet de démanganiser facilement et efficacement une solution contenant d'autres ions métalliques.

Seul le sel de peroxomonosulfate est consommé durant le processus. La solution à traiter peut ensuite être soumise à un autre procédé, par exemple, en vue de valoriser un autre élément présent dans la solution à traiter. Avantageusement, on pourra valoriser du nickel et/ou du cobalt.

Avantageusement, les ions additionnels sont des ions cobalt. Avec de telles gammes de pH, un effet synergique est observé entre le sel de peroxomonosulfate (HSO₅⁻) et les ions cobalt(II). La combinaison de ces éléments catalyse l'extraction sélective du manganèse. Le peroxomonosulfate et l'ion cobalt (II) sont des composés actifs qui vont réagir ensemble pour former des espèces fortement oxydantes (comme des radicaux ou du cobalt(III)) et augmenter fortement la réactivité du peroxomonosulfate (d'un facteur 10 voire 15). Durant le procédé, des ions Co(III) sont générés. Ces ions vont oxyder le manganèse. A l'issue du procédé, le cobalt (II) est régénéré. Le cobalt reste soluble en solution durant la totalité du procédé. Les ions cobalt Co²⁺ peuvent être initialement présents en solution ou introduits au cours du procédé.

Avantageusement, le rapport entre la concentration de cobalt et la concentration de manganèse va de 0,1 à 10 et de préférence de 0,5 à 1. Une telle gamme conduit à une extraction efficace du manganèse tout en limitant les risques d'entrainement lors de la précipitation.

Avantageusement, la solution à traiter comporte, en outre, des ions nickel.

Avantageusement, le pH de la solution à traiter va de 0,75 à 1,5.

Selon une première variante de réalisation avantageuse, le sel de peroxomonosulfate est introduit sous forme liquide.

Selon une autre variante de réalisation avantageuse, le sel de peroxomonosulfate est introduit sous forme solide, ce qui limite la quantité d'effluents.

Avantageusement, le sel peroxomonosulfate est introduit à un débit allant de 0,1g/min/L_{solution à traiter} à 30g/min/L_{solution à traiter}, et de préférence de 1g/min/L_{solution à traiter} à 10g/min/L_{solution à traiter}.

Avantageusement, la température va de 20°C à 90°C, et de préférence de 40°C à 80°C, par exemple de l'ordre de 50°C.

Avantageusement, le sel de peroxomonosulfate est du peroxomonosulfate de potassium. Il s'agit, de préférence, du sel triple de peroxomonosulfate de potassium. Ce composé est stable, peu coûteux et est simple à utiliser.

Avantageusement, la solution à traiter est obtenue par dissolution d'une électrode de batterie Li-ion. Il peut s'agir, avantageusement, d'une électrode nickel-manganèse-cobalt (NMC).

Le procédé présente de nombreux avantages :
- réduire l'impact environnemental : pas de génération de gaz toxiques, une faible consommation énergétique, et une diminution très importante des effluents puisque, d'une part, le procédé ne nécessite pas de solutions acides et, d'autre part, le sel de peroxomonosulfate a une très grande solubilité ; un gain de 50% en volume a pu être constaté,
- le procédé est plus efficace par rapport aux procédés de l'art antérieur puisqu'il n'y a pas d'effet de dilution,
- le sel dissout en solution est très stable par rapport à un mélange d'acides,
- réduire le coût du traitement (prix des sels, diminution des risques pour les installations, etc...),
- simplifier le procédé et le rendre plus facilement industrialisable car les espèces ne sont pas dangereuses et sont faciles à manipuler,
- extraire sélectivement le manganèse d'une solution contenant d'autres espèces valorisables comme le nickel ou le cobalt, avec une bonne efficacité.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

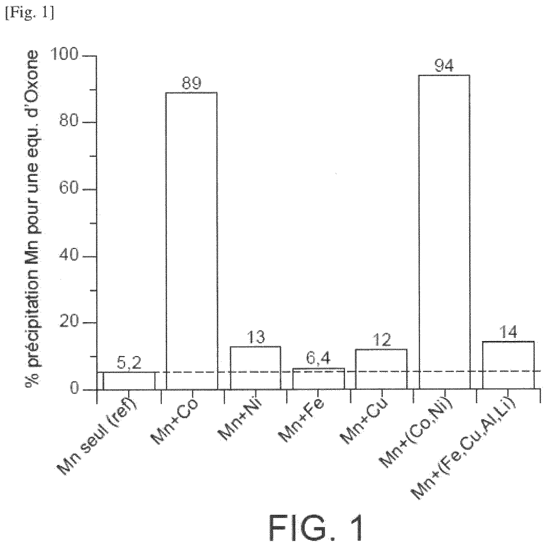

La présente invention sera mieux comprise à la lecture de la description d'exemples de réalisation donnés à titre purement indicatif et nullement limitatif en faisant référence à la figure 1 annexée.

La figure 1 est un graphique représentant l'évolution de l'efficacité de séparation du manganèse suivant la nature des ions en solution, à température ambiante pour une équivalence d'Oxone® par rapport au manganèse, selon un mode de réalisation particulier de l'invention.

### EXPOSÉ DÉTAILLÉ DE MODES DE RÉALISATION PARTICULIERS

Bien que cela ne soit aucunement limitatif, l'invention trouve particulièrement des applications dans le domaine du recyclage et/ou de la valorisation des aciers, des engrais, des catalyseurs, des électrodes à base de nickel des batteries/accumulateurs/piles en particulier de type Li-ion.

L'invention trouve également des applications pour la démanganisation :
- des nodules polymétalliques des grands fonds,
- des bains d'électrolyse contenant, par exemple, du zinc (le manganèse est une impureté qui doit être retirée car cet élément s'oxyde à l'anode des bains d'électrolyse),
- des effluents des usines de traitement de minerais comme la latérite : le manganèse est l'une des impuretés qui est simultanément lixiviée avec le nickel et le cobalt, et qui doit être éliminée.

De préférence, la solution à traiter provient de la dissolution d'une matrice polymétallique, notamment une électrode de batterie, en particulier une cathode d'une batterie Li-ion.

Le procédé de séparation sélective du manganèse comprend une étape au cours de laquelle on ajoute à la solution à traiter un sel de peroxomonosulfate (HSO₅⁻), la solution à traiter étant à un pH allant de 0,1 à 2,5.

Le procédé selon l'invention conduit à la séparation sélective du manganèse des autres espèces contenues dans une solution à traiter.

Les autres espèces peuvent être des métaux, des métaux alcalins et/ou des terres rares. A titre d'exemple illustratif et non limitatif, on peut citer les éléments suivants : Co, Ni, Cu, Zn, Mg, Li et Ca.

De préférence, en plus des ions manganèse, la solution contient des ions cobalt. La solution peut également contenir à la fois des ions cobalt et des ions nickel. L'efficacité d'extraction est particulièrement élevée en présence de cobalt (figure 1).

Les ions cobalt peuvent être présents initialement en solution ou bien ajouter au cours du procédé, préalablement, simultanément ou ultérieurement au sel de peroxomonosulfate.

Le rapport entre la concentration en cobalt et la concentration en manganèse va de 0,1 à 10 et de préférence de 0,5 à 1.

De préférence, la concentration en manganèse, dans la solution à traiter, est supérieure à 0,1g/L, plus préférentiellement supérieure à 0,5g/L et encore plus préférentiellement supérieure à 1g/L. De préférence, la concentration en manganèse est inférieure à 50g/L et encore plus préférentiellement inférieure à 40g/L pour éviter les effets d'entrainement qui réduiraient la pureté du produit final.

La solution est, de préférence, une solution aqueuse. Selon une autre variante de réalisation, la solution est une solution organique.

Le sel de peroxomonosulfate, aussi appelé hydrogénopersulfate ou peroxomonosulfate, est un composé peu couteux et à faible impact environnemental. Le composé est stable, et peut être manipulé sans risques ou précautions importantes, contrairement aux autres procédés de l'art antérieur (Cl₂, O₃, SO₂/O₂,...). Les sous-produits de la réaction sont essentiellement des sulfates ce qui est un avantage, vis-à-vis de procédés à base de chlorures (génération de Cl₂). La précipitation oxydante est sélective et efficace.

De préférence, il s'agit d'un sel de peroxomonosulfate de potassium. Il peut s'agir d'un sel triple. La formule du sel triple de peroxomonosulfate de potassium est 2KHSO₅ • KHSO₄ • K₂SO₄.

Un tel produit est, par exemple, commercialisé sous la référence Oxone®. On peut également utiliser le sel triple de peroxomonosulfate de potassium commercialisé sous la référence Caroat®.

Selon une première variante de réalisation, le sel de peroxomonosulfate peut être introduit sous forme liquide. Il est, par exemple, solubiliser préalablement dans de l'eau. Il présente l'avantage d'être très soluble dans l'eau (250g/L), ce qui réduit la quantité d'effluents issus du procédé.

Selon une deuxième variante de réalisation, le sel de peroxomonosulfate est introduit sous forme de solide dans la solution à traiter. Ceci évite d'ajouter un solvant aqueux dans la solution à traiter.

Avantageusement, le sel de peroxomonosulfate est introduit avec un débit allant de 0,1g par minute par litre de solution (g/min/Lₛₒₗᵤₜᵢₒₙ) à 30g/min/Lₛₒₗᵤₜᵢₒₙ et préférentiellement de 1 à 10 g/min/Lₛₒₗᵤₜᵢₒₙ.

La solution à traiter est à un pH allant de 0,1 à 2,5 pour former des ions Mn(III) et/ou Mn(IV), et les faire précipiter sous la forme de MnOOH. On choisira par exemple un pH de l'ordre de 0,9. De préférence, le pH va de 0,75 à 1,5.

Pour assurer un pH stable, un asservissement est réalisé durant l'introduction du sel de peroxomonosulfate. L'asservissement peut être réalisé avec une base de type NaOH, Na₂CO₃ ou encore NH₄OH. La base peut être introduite sous forme liquide ou solide. On choisit, avantageusement, le carbonate de sodium sous forme solide pour réduire les effluents.

La température de traitement peut aller de 20°C à 95°C, de préférence de 30°C à 90°C, et encore plus préférentiellement de 40°C à 80°C. Par exemple, on choisit une température au voisinage de 50°C.

La pression est, avantageusement, la pression ambiante (de l'ordre de 1bar).

A l'issue du procédé, on récupère, avantageusement, les autres éléments demeurant dans la solution à traiter, comme par exemple le nickel, qui présente également une forte valeur ajoutée.

Exemples illustratifs et non limitatifs d'un mode de réalisation :

### Exemple 1 : Elimination du manganèse dans une matrice de cobalt et de nickel par injection liquide de peroxomonosulfate

Dans une solution d'acide sulfurique (80 mL) à pH=1,37 est introduit 0,15 mol.L⁻¹ de Mn(II), Co(II) et Ni(II). Une solution d'Oxone® à 250 g/L est injectée avec un débit de 0,25 mL/min dans la solution par un système de pousse seringue. En parallèle un asservissement en soude 5M est mis en place pour réguler le pH autour de la valeur de consigne de 1,37. Le milieu est à la température de 25°C sous une agitation de tour/min. L'injection est réalisée jusqu'à obtenir la stœchiométrie théorique pour l'oxydation de Mn²⁺ en MnO₂. A la stœchiométrie théorique, l'essai est arrêté et un prélèvement est réalisé en solution, puis le solide est récupéré.

Après analyse du prélèvement de la solution par une analyse de technique à plasma induit (ICP pour « Inductively Coupled Plasma »), l'efficacité est déterminée en considérant l'oxydation de l'ion Mn(II) en Mn(IV) solide. Elle est de 96% de précipitation du manganèse. L'analyse du solide après lavage et digestion, indique une pureté de 98% du solide de manganèse qui est sous la forme d'un oxo-hydroxyde de manganèse.

### Exemple 2: Elimination du manganèse dans une matrice de cobalt et nickel par injection solide de peroxomonosulfate

Dans une solution d'acide sulfurique (450mL) à pH=0,9 est introduit 0,15 mol.L⁻¹ de Mn(II), Co(II) et Ni(II). Une solution d'Oxone® sous forme de poudre est injectée avec un débit de 350 mg/min dans la solution. En parallèle un asservissement en soude 10M est mis en place pour réguler le pH autour de la valeur de consigne de 0,9. Le milieu est à la température de 50°C sous une agitation de 400tour/min. L'injection est réalisée jusqu'à obtenir la stœchiométrie théorique pour l'oxydation de Mn²⁺ en MnO₂. A la stœchiométrie théorique, l'essai est arrêté et un prélèvement est réalisé en solution, puis le solide est récupéré.

Après analyse du prélèvement de la solution par ICP, l'efficacité est de 99% de précipitation du manganèse. L'analyse du solide après lavage et digestion, indique une pureté de 99% du solide de manganèse qui est sous la forme d'un oxo-hydroxyde de manganèse.

### Exemple 3 : Elimination du manganèse dans une matrice de cobalt et nickel par injection solide de peroxomonosulfate et asservissement solide en carbonate de sodium

Dans une solution d'acide sulfurique (450 mL) à pH=0,9 est introduit 0,3 mol.L⁻¹ de Mn(II), Co(II) et Ni(II). Une solution d'Oxone® sous forme de poudre est injectée avec un débit de 350 mg/min dans la solution. En parallèle un asservissement en poudre de carbonate de sodium est mis en place pour réguler le pH autour de la valeur de consigne de 0,9. Le milieu est à la température de 50°C sous une agitation de 400tour/min. L'injection est réalisée jusqu'à obtenir la stœchiométrie théorique pour l'oxydation de Mn²⁺ en MnO₂. A la stœchiométrie théorique, l'essai est arrêté et un prélèvement est réalisé en solution, puis le solide est récupéré.

Après analyse du prélèvement de la solution par ICP, l'efficacité est de 100% de précipitation du manganèse. L'analyse du solide après lavage et digestion, indique une pureté de 99% du solide de manganèse qui est sous la forme d'un oxo-hydroxyde de manganèse.

### Exemple 4 : Elimination du manganèse dans une matrice de cobalt par injection solide de peroxomonosulfate

Dans une solution d'acide sulfurique (450mL) à pH=0,9 est introduit 0,15 mol.L⁻¹ de Mn(II) et Co(II). Une solution d'Oxone® sous forme de poudre est injectée avec un débit de 350 mg/min dans la solution. En parallèle un asservissement en soude 10M est mis en place pour réguler le pH autour de la valeur de consigne de 0,9. Le milieu est à la température de 25°C sous une agitation de 400tour/min. L'injection est réalisée jusqu'à obtenir la stœchiométrie théorique pour l'oxydation de Mn²⁺ en MnO₂. A la stœchiométrie théorique, l'essai est arrêté, un prélèvement est réalisé en solution, puis le solide est récupéré.

Après mesure du prélèvement de la solution par ICP, l'efficacité est de 90% de précipitation du manganèse. L'analyse du solide après lavage et digestion, indique une pureté de 99% du solide de manganèse qui est sous la forme d'un oxo-hydroxyde de manganèse.

## Revendications

1. Procédé de séparation sélective de manganèse comprenant une étape au cours de laquelle on ajoute un sel de peroxomonosulfate à une solution à traiter contenant des ions manganèse et des ions additionnels, choisis parmi des ions métalliques, des ions de métaux alcalins et/ou des ions de terres rares, la solution à traiter ayant un pH allant de 0,1 à 2,5 moyennant quoi on fait précipiter sélectivement les ions manganèse sous forme d'oxyhydroxyde de manganèse.

2. Procédé selon la revendication précédente, **caractérisé en ce que** les ions additionnels sont des ions cobalt.

3. Procédé selon la revendication précédente, **caractérisé en ce que** le rapport entre la concentration de cobalt et la concentration de manganèse va de 0,1 à 10 et de préférence de 0,5 à 1.

4. Procédé selon l'une quelconque des revendications précédentes, **caractérisé en ce que** la solution à traiter comporte, en outre, des ions nickel.

5. Procédé selon l'une des revendications précédentes, **caractérisé en ce que** le pH de la solution à traiter va de 0,75 à 1,5.

6. Procédé selon l'une quelconque des revendications 1 à 4, **caractérisé en ce que** le sel de peroxomonosulfate est introduit sous forme liquide.

7. Procédé selon l'une quelconque des revendications 1 à 4, **caractérisé en ce que** le sel de peroxomonosulfate est introduit sous forme solide.

8. Procédé selon l'une quelconque des revendications précédentes, **caractérisé en ce que** le sel peroxomonosulfate est introduit à un débit allant de 0,1g/min/L_{solution à traiter} à 30g/min/L_{solution à traiter}, et de préférence de 1g/min/L_{solution à traiter} à 10g/min/L_{solution à traiter}.

9. Procédé selon l'une quelconque des revendications précédentes, **caractérisé en ce que** la température va de 20°C à 90°C, et de préférence de 40°C à 80°C.

10. Procédé selon l'une quelconque des revendications précédentes, **caractérisé en ce que** le sel de peroxomonosulfate est du peroxomonosulfate de potassium, et de préférence le sel triple de peroxomonosulfate de potassium.

11. Procédé selon l'une quelconque des revendications précédentes, **caractérisé en ce que** la solution à traiter est obtenue par dissolution d'une électrode de batterie Li-ion, de préférence une électrode nickel-manganèse-cobalt.
